# EUROPEAN PATENT APPLICATION

(11) **EP 4 765 621 A1**
(43) Date of publication of application: **24.06.2026**
(21) Application number: 25814097.9
(22) Date of filing: 02.01.2025
(51) Int. Cl.: H02P 6/06, H04M 1/72454, H02P 23/14

(54) **VIBRATION CONTROL METHOD AND ELECTRONIC DEVICE**

(30) Priority: 30.05.2024 CN 202410698141
(71) Applicant: HUAWEI TECHNOLOGIES CO., LTD., Shenzhen 518129 (CN)
(72) Inventor: GUO, Dong, Shenzhen, Guangdong 518129 (CN); CHEN, Puwang, Shenzhen, Guangdong 518129 (CN); LAN, Wentao, Shenzhen, Guangdong 518129 (CN)
(74) Representative: Grünecker Patent- und Rechtsanwälte PartG mbB
(86) International application number: PCT/CN2025/070266
(87) International publication number: WO 2025/246372

(57) **Abstract**

This application provides a vibration control method and an electronic device, and relates to the field of terminal technologies. In this application, a vibration parameter of a motor can be obtained based on a usage status and battery level information of the electronic device comprehensively, to implement adaptive adjustment of the vibration parameter and improve user experience. The method is applied to an electronic device with a foldable screen, and includes: obtaining the usage status of the electronic device; obtaining the battery level information of the electronic device; obtaining the vibration parameter based on the usage status and the battery level information; and driving, based on the vibration parameter, the motor to vibrate.

## Description

This application claims priority to Chinese Patent Application No. 202410698141.9, filed with the China National Intellectual Property Administration on May 30, 2024 and entitled "VIBRATION CONTROL METHOD AND ELECTRONIC DEVICE", which is incorporated herein by reference in its entirety.

### TECHNICAL FIELD

This application relates to the field of terminal technologies, and in particular, to a vibration control method and an electronic device.

### BACKGROUND

A motor is used in an electronic device (for example, a mobile phone) to implement a vibration function, so that a user receives touch feedback when performing a touch operation on the electronic device, to confirm an operating status; or the electronic device vibrates when receiving an incoming call or a notification, to remind, in a timely manner, the user to pay attention.

With development of terminal technologies, more users use electronic devices with foldable screens. However, due to physical structural differences of the electronic device with the foldable screen in two usage statuses: a folded state and an unfolded state, vibration feedback brought to the user in the two usage scenarios is different, affecting user experience.

### SUMMARY

To resolve the foregoing technical problems, this application provides a vibration control method and an electronic device. According to technical solutions provided in this application, a vibration parameter of a motor is obtained based on a usage status and battery level information of the electronic device comprehensively, to implement adaptive adjustment of the vibration parameter and improve user experience.

To achieve the foregoing technical objective, this application provides the following technical solutions.

According to a first aspect, a vibration control method is provided, and is applied to an electronic device with a foldable screen. The method includes: obtaining a usage status of the electronic device; obtaining battery level information of the electronic device; obtaining a vibration parameter based on the usage status and the battery level information; and driving, based on the vibration parameter, a motor to vibrate.

In this way, the electronic device can obtain a corresponding vibration parameter based on the usage status and the battery level information. Adaptive adjustment of vibration feedback is implemented through vibration parameter adjustment, to improve user experience.

According to the first aspect, the vibration parameter includes a gain flag bit, and the driving, based on the vibration parameter, the motor to vibrate includes: obtaining a gain corresponding to the gain flag bit; obtaining a first vibration waveform; correcting, by using an audio codec chip, the first vibration waveform based on the gain, to obtain a second vibration waveform; and driving, based on the second vibration waveform, the motor to vibrate.

According to the first aspect or any one of the foregoing implementations of the first aspect, the obtaining the first vibration waveform includes: obtaining, by using a first path of the audio codec chip, the first vibration waveform output by a motor service, where the first path corresponds to the gain, and the first vibration waveform is a default vibration waveform.

In some examples, a motor driving manner of the electronic device may include audio data driving. The audio data driving is that a motor driver delivers a vibration waveform to the audio codec chip via a digital signal processor based on an underlying path selected by an audio service. Different underlying paths correspond to different gains. In this way, the audio codec chip delivers a vibration waveform corrected by the gain to the motor, to indicate the motor to vibrate based on the corrected waveform.

In this way, in an audio data driving scenario, the electronic device can obtain a needed gain based on the usage status and the battery level information, to correct the default waveform based on the gain, to adjust the vibration feedback.

According to the first aspect or any one of the foregoing implementations of the first aspect, the obtaining the vibration parameter based on the usage status and the battery level information includes: matching the corresponding gain flag bit based on the usage status and the battery level information.

In some examples, the electronic device is configured with vibration parameters corresponding to different usage statuses and battery level information, for example, the gain flag bit.

In this way, the electronic device is preconfigured with the vibration parameters corresponding to different usage statuses and battery level information, to improve efficiency of obtaining the vibration parameter.

According to the first aspect or any one of the foregoing implementations of the first aspect, the vibration parameter includes a third vibration waveform, and the driving, based on the vibration parameter, the motor to vibrate includes: obtaining, by using a motor chip, the third vibration waveform output by a motor service; and driving, based on the third vibration waveform by using the motor chip, the motor to vibrate.

In some examples, the motor driving manner of the electronic device may include chip driving. Motor driving is that a motor service delivers vibration waveforms with different amplitudes to a motor chip via a motor driver, and the motor chip may indicate the motor to vibrate based on different vibration waveforms.

In this way, in a chip driving scenario, the electronic device can obtain a needed motor vibration waveform based on the usage status and the battery level information, to adjust the vibration feedback based on adjustment of the motor vibration waveform.

According to the first aspect or any one of the foregoing implementations of the first aspect, the obtaining the vibration parameter based on the usage status and the battery level information includes: matching the corresponding third vibration waveform based on the usage status and the battery level information.

In some examples, the electronic device is configured with vibration parameters corresponding to different usage statuses and battery level information, for example, the vibration waveform.

In this way, the electronic device is preconfigured with the vibration parameters corresponding to different usage statuses and battery level information, to improve efficiency of obtaining the vibration parameter.

According to the first aspect or any one of the foregoing implementations of the first aspect, the electronic device is disposed with a Hall effect sensor, and the obtaining the usage status of the electronic device includes: obtaining a Hall parameter detected by the Hall effect sensor; and obtaining the usage status based on the Hall parameter.

In some examples, the Hall effect sensor reports the Hall parameter through interrupt triggering. The interrupt triggering includes, for example, triggering, when the usage status of the electronic device changes, the Hall effect sensor to report the Hall parameter. For example, after the usage status of the electronic device changes from an unfolded state to a folded state, the Hall effect sensor reports the Hall parameter. Alternatively, the usage status of the electronic device changes from the folded state to the unfolded state, and then the Hall effect sensor reports the Hall parameter.

Optionally, the electronic device is disposed with one or more Hall effect sensors. In this case, the electronic device may obtain the usage status of the electronic device based on one or more groups of Hall parameters.

In this way, the electronic device may obtain a current usage status of the electronic device by using the Hall parameter reported by the Hall effect sensor.

According to the first aspect or any one of the foregoing implementations of the first aspect, the obtaining the vibration parameter based on the usage status and the battery level information includes: obtaining a first voltage indicated by the battery level information. When the first voltage is less than or equal to a voltage threshold, the electronic device is in a low battery level state. When the first voltage is greater than the voltage threshold, the electronic device is in a high battery level state.

Optionally, the usage status and the battery level information of the electronic device are combined, and the electronic device may be in four statuses: a high battery level unfolded state, a low battery level unfolded state, a high battery level folded state, and a low battery level folded state.

In this way, the electronic device can determine, by determining a voltage value, that the electronic device is in the high battery level state or the low battery level state, to determine a vibration parameter adjustment direction.

Optionally, the electronic device may further determine a battery level status of the electronic device by using a current value.

According to the first aspect or any one of the foregoing implementations of the first aspect, the usage status further includes an intermediate state.

For example, in a process in which the electronic device changes from the unfolded state to the folded state, a state of being not fully folded may be defined as the intermediate state.

Optionally, the electronic device may be further disposed with an acceleration sensor and a gyroscope sensor. The electronic device can obtain a folding angle of the electronic device by using detection data of the acceleration sensor and the gyroscope sensor, to determine whether the electronic device is in the intermediate state.

According to a second aspect, a vibration control method is provided, and is applied to an electronic device with a foldable screen. The method includes: when the electronic device is in a first usage status, in response to a vibration event, obtaining a first vibration parameter based on the first usage status and first battery level information of the electronic device; driving, based on the first vibration parameter, a motor to vibrate; in a vibration process, in response to a user operation, switching, by the electronic device, to a second usage status, where the second usage status is different from the first usage status; obtaining a second vibration parameter based on the second usage status and second battery level information of the electronic device; and driving, based on the second vibration parameter, the motor to vibrate, where vibration feedback corresponding to the first vibration parameter is the same as or has a first deviation from vibration feedback corresponding to the second vibration parameter.

In this way, the electronic device may obtain, through comprehensive determining with reference to the usage status and the battery level information of the electronic device, a vibration parameter suitable for a current usage scenario, so that the electronic device can provide same or similar vibration feedback for the user in different usage scenarios, to improve user experience.

According to the second aspect, the vibration feedback includes a vibration acceleration, and that the vibration feedback corresponding to the first vibration parameter is the same as or has the first deviation from the vibration feedback corresponding to the second vibration parameter includes: driving, based on the first vibration parameter, the motor to vibrate to generate a first vibration acceleration, and driving, based on the second vibration parameter, the motor to vibrate to generate a second vibration acceleration, where the first vibration acceleration is the same as or has the first deviation from the second vibration acceleration.

In some examples, the vibration feedback is measured by using the vibration acceleration generated through motor vibration.

Optionally, the vibration feedback may be measured by using the vibration acceleration (unit: g). For example, a vibration acceleration of vibration feedback generated through motor vibration when the electronic device is in a high battery level unfolded state may be obtained, and the vibration acceleration may be set as a target vibration acceleration. In this case, the electronic device may be preconfigured with vibration parameters corresponding to different statuses of the electronic device, so that when the electronic device is in different statuses, a vibration acceleration generated through motor vibration is the same as the target vibration acceleration. "Same" does not mean absolute same. When the electronic device is in different statuses, there may be a deviation between vibration accelerations generated through motor vibration. For example, the deviation may be ±30%. For example, when the target vibration acceleration is 1 g, the vibration acceleration generated through motor vibration when the electronic device is in different statuses may be [0.7, 1.3] g. For example:

Optionally, the vibration feedback generated when the electronic device is in the high battery level unfolded state is used as a reference, and vibration feedback generated when the electronic device is in another status is adjusted, through vibration parameter adjustment, to be the same as or similar to the vibration feedback generated when the electronic device is in the high battery level unfolded state.

It should be understood that, vibration feedback corresponding to the electronic device in another status may alternatively be used as a reference, to obtain vibration parameters corresponding to different usage statuses and battery level information of the electronic device.

In this way, the electronic device is preconfigured with the vibration parameters corresponding to different usage statuses and battery level information, to improve efficiency of obtaining the vibration parameter.

In addition, the motor is located on a mainboard of the electronic device, and vibration feedback provided in an unfolded state is weak. In this case, the vibration feedback in the high battery level unfolded state is used as vibration feedback reference in different statuses, so that a problem of an abnormal device sound caused by large vibration can be resolved when it is ensured that the electronic device can provide same or similar vibration feedback for the user in different statuses.

According to the second aspect or any one of the foregoing implementations of the second aspect, the first vibration parameter includes a gain flag bit, and the driving, based on the first vibration parameter, the motor to vibrate includes: obtaining a gain corresponding to the gain flag bit; obtaining a first vibration waveform; correcting, by using an audio codec chip, the first vibration waveform based on the gain, to obtain a second vibration waveform; and driving, based on the second vibration waveform, the motor to vibrate.

According to the second aspect or any one of the foregoing implementations of the second aspect, the obtaining the first vibration waveform includes: obtaining, by using a first path of the audio codec chip, the first vibration waveform output by a motor service, where the first path corresponds to the gain, and the first vibration waveform is a default vibration waveform.

According to the second aspect or any one of the foregoing implementations of the second aspect, the obtaining the first vibration parameter based on the first usage status and the first battery level information includes: matching the corresponding gain flag bit based on the first usage status and the first battery level information.

According to the second aspect or any one of the foregoing implementations of the second aspect, the first vibration parameter includes a third vibration waveform, and the driving, based on the first vibration parameter, the motor to vibrate includes: obtaining, by using a motor chip, the third vibration waveform output by a motor service; and driving, based on the third vibration waveform by using the motor chip, the motor to vibrate.

According to the second aspect or any one of the foregoing implementations of the second aspect, the obtaining the first vibration parameter based on the first usage status and the first battery level information includes: matching the corresponding third vibration waveform based on the first usage status and the first battery level information.

According to the second aspect or any one of the foregoing implementations of the second aspect, the electronic device is disposed with a Hall effect sensor, and the obtaining the first usage status of the electronic device includes: obtaining a Hall parameter detected by the Hall effect sensor; and obtaining the first usage status based on the Hall parameter.

According to the second aspect or any one of the foregoing implementations of the second aspect, the obtaining the vibration parameter based on the first usage status and the first battery level information includes: obtaining a first voltage indicated by the first battery level information. When the first voltage is less than or equal to a voltage threshold, the electronic device is in a low battery level state. When the first voltage is greater than the voltage threshold, the electronic device is in a high battery level state.

According to the second aspect or any one of the foregoing implementations of the second aspect, the first usage status further includes an intermediate state.

For technical effects corresponding to any one of the second aspect and the implementations of the second aspect, refer to technical effects corresponding to any one of the first aspect and the implementations of the first aspect. Details are not described herein again.

According to a third aspect, an electronic device is provided. The electronic device includes a processor and a memory. The memory is coupled to the processor, the memory is configured to store computer program code, and the computer program code includes computer instructions. When the processor reads the computer instructions from the memory, the electronic device is caused to perform the following operations: obtaining a usage status of the electronic device; obtaining battery level information of the electronic device; obtaining a vibration parameter based on the usage status and the battery level information; and driving, based on the vibration parameter, a motor to vibrate.

According to the third aspect, the electronic device is an electronic device with a foldable screen.

According to the third aspect or any one of the foregoing implementations of the third aspect, the vibration parameter includes a gain flag bit, and the driving, based on the vibration parameter, the motor to vibrate includes: obtaining a gain corresponding to the gain flag bit; obtaining a first vibration waveform; correcting, by using an audio codec chip, the first vibration waveform based on the gain, to obtain a second vibration waveform; and driving, based on the second vibration waveform, the motor to vibrate.

According to the third aspect or any one of the foregoing implementations of the third aspect, the obtaining the first vibration waveform includes: obtaining, by using a first path of the audio codec chip, the first vibration waveform output by a motor service, where the first path corresponds to the gain, and the first vibration waveform is a default vibration waveform.

According to the third aspect or any one of the foregoing implementations of the third aspect, the obtaining the vibration parameter based on the usage status and the battery level information includes: matching the corresponding gain flag bit based on the usage status and the battery level information.

According to the third aspect or any one of the foregoing implementations of the third aspect, the vibration parameter includes a third vibration waveform, and the driving, based on the vibration parameter, the motor to vibrate includes: obtaining, by using a motor chip, the third vibration waveform output by a motor service; and driving, based on the third vibration waveform by using the motor chip, the motor to vibrate.

According to the third aspect or any one of the foregoing implementations of the third aspect, the obtaining the vibration parameter based on the usage status and the battery level information includes: matching the corresponding third vibration waveform based on the usage status and the battery level information.

According to the third aspect or any one of the foregoing implementations of the third aspect, the electronic device is disposed with a Hall effect sensor, and the obtaining the usage status of the electronic device includes: obtaining a Hall parameter detected by the Hall effect sensor; and obtaining the usage status based on the Hall parameter.

According to the third aspect or any one of the foregoing implementations of the third aspect, the obtaining the vibration parameter based on the usage status and the battery level information includes: obtaining a first voltage indicated by the battery level information. When the first voltage is less than or equal to a voltage threshold, the electronic device is in a low battery level state. When the first voltage is greater than the voltage threshold, the electronic device is in a high battery level state.

According to the third aspect or any one of the foregoing implementations of the third aspect, the usage status further includes an intermediate state.

According to a fourth aspect, an electronic device is provided. The electronic device includes a processor and a memory. The memory and a display screen are coupled to the processor. The memory is configured to store computer program code. The computer program code includes computer instructions. When the processor reads the computer instructions from the memory, the electronic device is caused to perform the following operations: when the electronic device is in a first usage status, in response to a vibration event, obtaining a first vibration parameter based on the first usage status and first battery level information of the electronic device; driving, based on the first vibration parameter, a motor to vibrate; in a vibration process, in response to a user operation, switching, by the electronic device, to a second usage status, where the second usage status is different from the first usage status; obtaining a second vibration parameter based on the second usage status and second battery level information of the electronic device; and driving, based on the second vibration parameter, the motor to vibrate, where vibration feedback corresponding to the first vibration parameter is the same as or has a first deviation from vibration feedback corresponding to the second vibration parameter.

According to the fourth aspect, the electronic device is an electronic device with a foldable screen.

According to the fourth aspect or any one of the foregoing implementations of the fourth aspect, the vibration feedback includes a vibration acceleration, and that the vibration feedback corresponding to the first vibration parameter is the same as or has the first deviation from the vibration feedback corresponding to the second vibration parameter includes: driving, based on the first vibration parameter, the motor to vibrate to generate a first vibration acceleration, and driving, based on the second vibration parameter, the motor to vibrate to generate a second vibration acceleration, where the first vibration acceleration is the same as or has the first deviation from the second vibration acceleration.

According to the fourth aspect or any one of the foregoing implementations of the fourth aspect, the first vibration parameter includes a gain flag bit, and the driving, based on the first vibration parameter, the motor to vibrate includes: obtaining a gain corresponding to the gain flag bit; obtaining a first vibration waveform; correcting, by using an audio codec chip, the first vibration waveform based on the gain, to obtain a second vibration waveform; and driving, based on the second vibration waveform, the motor to vibrate.

According to the fourth aspect or any one of the foregoing implementations of the fourth aspect, the obtaining the first vibration waveform includes: obtaining, by using a first path of the audio codec chip, the first vibration waveform output by a motor service, where the first path corresponds to the gain, and the first vibration waveform is a default vibration waveform.

According to the fourth aspect or any one of the foregoing implementations of the fourth aspect, the obtaining the first vibration parameter based on the first usage status and the first battery level information includes: matching the corresponding gain flag bit based on the first usage status and the first battery level information.

According to the fourth aspect or any one of the foregoing implementations of the fourth aspect, the first vibration parameter includes a third vibration waveform, and the driving, based on the first vibration parameter, the motor to vibrate includes: obtaining, by using a motor chip, the third vibration waveform output by a motor service; and driving, based on the third vibration waveform by using the motor chip, the motor to vibrate.

According to the fourth aspect or any one of the foregoing implementations of the fourth aspect, the obtaining the first vibration parameter based on the first usage status and the first battery level information includes: matching the corresponding third vibration waveform based on the first usage status and the first battery level information.

According to the fourth aspect or any one of the foregoing implementations of the fourth aspect, the electronic device is disposed with a Hall effect sensor, and the obtaining the first usage status of the electronic device includes: obtaining a Hall parameter detected by the Hall effect sensor; and obtaining the first usage status based on the Hall parameter.

According to the fourth aspect or any one of the foregoing implementations of the fourth aspect, the obtaining the vibration parameter based on the first usage status and the first battery level information includes: obtaining a first voltage indicated by the first battery level information. When the first voltage is less than or equal to a voltage threshold, the electronic device is in a low battery level state. When the first voltage is greater than the voltage threshold, the electronic device is in a high battery level state.

According to the fourth aspect or any one of the foregoing implementations of the fourth aspect, the first usage status further includes an intermediate state.

According to a fifth aspect, an electronic device is provided. The electronic device has a function of implementing the vibration control method in the first aspect and any one of the possible implementations of the first aspect. Alternatively, the electronic device has a function of implementing the vibration control method in the second aspect and any one of the possible implementations of the second aspect. The function may be implemented by hardware, or may be implemented by hardware executing corresponding software. The hardware or the software includes one or more modules corresponding to the function.

According to a sixth aspect, a computer-readable storage medium is provided. The computer-readable storage medium stores a computer program (which may also be referred to as instructions or code). When the computer program is executed by an electronic device, the electronic device is caused to perform the method in the first aspect or any one of the implementations of the first aspect, or the electronic device is caused to perform the method in the second aspect or any one of the implementations of the second aspect.

According to a seventh aspect, a computer program product is provided. When the computer program product runs on an electronic device, the electronic device is caused to perform the method in the first aspect or any one of the implementations of the first aspect, or the electronic device is caused to perform the method in the second aspect or any one of the implementations of the second aspect.

According to an eighth aspect, a circuit system is provided. The circuit system includes a processing circuit. The processing circuit is configured to perform the method in the first aspect or any one of the implementations of the first aspect, or the processing circuit is configured to perform the method in the second aspect or any one of the implementations of the second aspect.

According to a ninth aspect, a chip system is provided, including at least one processor and at least one interface circuit. The at least one interface circuit is configured to perform a transceiver function; and send instructions to the at least one processor. When the at least one processor executes the instructions, the at least one processor performs the method in the first aspect or any one of the implementations of the first aspect; or the at least one processor performs the method in the second aspect or any one of the implementations of the second aspect.

For technical effects of the foregoing aspects, refer to each other. Details are not described herein.

### BRIEF DESCRIPTION OF DRAWINGS

FIG. 1A is a diagram of a product form of an electronic device with an inward-foldable screen according to an embodiment of this application;
FIG. 1B is a diagram of a product form of another electronic device with an inward-foldable screen according to an embodiment of this application;
FIG. 1C is a diagram of a product form of an electronic device with a tri-fold screen according to an embodiment of this application;
FIG. 2 is a diagram of a hardware structure of an electronic device according to an embodiment of this application;
FIG. 3 is a block diagram of a software structure of an electronic device according to an embodiment of this application;
FIG. 4 is a schematic flowchart 1 of a vibration control method according to an embodiment of this application;
FIG. 5 is a diagram of an audio data driving scenario according to an embodiment of this application;
FIG. 6 is a diagram of a motor driving scenario according to an embodiment of this application;
FIG. 7 is a diagram of a usage status of an electronic device with a bi-fold screen according to an embodiment of this application;
FIG. 8 is a diagram of a usage status of an electronic device with a tri-fold screen according to an embodiment of this application;
FIG. 9 is a schematic flowchart 2 of a vibration control method according to an embodiment of this application; and
FIG. 10 is a diagram of a structure of an electronic device according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe specific embodiments, but not to limit this application. The terms "one", "a", "the", "the foregoing", "this", and "the one" of singular forms used in this specification and the appended claims of this application are intended to include expressions such as "one or more", unless the opposite is explicitly indicated in the context thereof. It should be further understood that, in the following embodiments of this application, "at least one" and "one or more" mean one or more (including two).

In embodiments of this application, the term "and/or" is used for describing an association relationship between associated objects, and represents that three relationships may exist. For example, "A and/or B" may represent the following three cases: Only A exists, only B exists, and both A and B exist, where A and B may be singular or plural. The character "/" usually indicates an "or" relationship between the associated objects. "At least one of the following items (pieces)" or a similar expression thereof means any combination of these items, including a single item (piece) or any combination of a plurality of items (pieces). For example, at least one of a, b, or c may indicate a, b, c, a and b, a and c, b and c, or a, b, and c, where a, b, and c may be singular or plural. It should be understood that in embodiments of this application, "B corresponding to A" indicates that B is associated with A. For example, B may be determined based on A. It should be further understood that determining B based on A does not mean that B is determined based only on A. B may alternatively be determined based on A and/or other information.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes direct connection and indirect connection, unless otherwise specified. "First" and "second" are merely intended for description, and shall not be understood as an indication or implication of relative importance or an implicit indication of a quantity of indicated technical features.

In embodiments of this application, the term "example", "for example", or the like is used to represent giving an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

In some embodiments, a usage status of an electronic device with a foldable screen includes a folded state and an unfolded state. Due to physical structural differences in the two usage statuses: the folded state and the unfolded state, relative positions of motor distribution in the two usage statuses are different, and actual vibration waveform propagation is different. Therefore, vibration feedback brought to a user in the two different usage statuses is different, affecting user experience. For example, in some models of the device, a vibration sense in the folded state may be far greater than a vibration sense in the unfolded state, greatly affecting user experience.

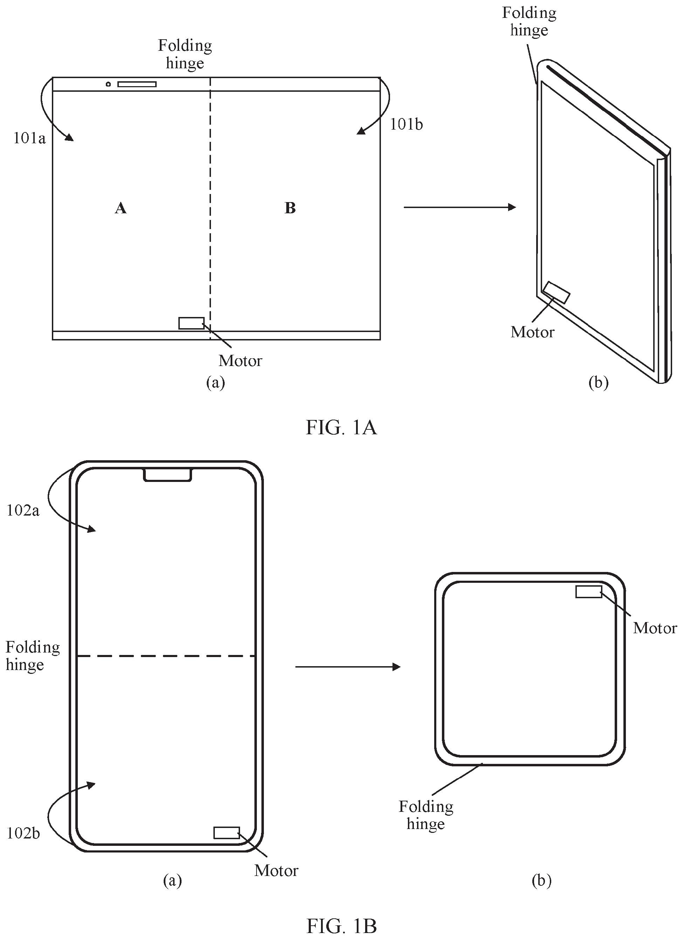

For example, FIG. 1A is a diagram of a product form of an electronic device with an inward-foldable screen according to an embodiment of this application. (a) in FIG. 1A is a diagram of a form of the inward-foldable screen that is fully unfolded. In this case, the inward-foldable screen is in an unfolded state. The inward-foldable screen may be folded along a folding hinge in directions 101a and 101b shown in (a) in FIG. 1A (folded outward, that is, folded toward a displayable user interface). (b) in FIG. 1A is a diagram of a form of the inward-foldable screen that is fully folded. In this case, the inward-foldable screen is in a folded state. It can be learned that, when the electronic device is in the unfolded state and the folded state, for a motor near the folding hinge, a relative position of motor distribution changes due to a change of a physical structure. For example, in the unfolded state, the motor is located at a bottom central position of a display screen; and in the folded state, the motor is located at a corner position of the display screen. Therefore, in the unfolded state and the folded state, the electronic device brings different vibration feedback to a user by using a same motor.

For another example, FIG. 1B is a diagram of a product form of another electronic device with an inward-foldable screen according to an embodiment of this application. (a) in FIG. 1B is a diagram of a form of the inward-foldable screen that is fully unfolded. In this case, the inward-foldable screen is in an unfolded state. The inward-foldable screen may be folded along a folding hinge in directions 102a and 102b shown in (a) in FIG. 1B (folded inward, that is, folded toward a displayable user interface). (b) in FIG. 1B is a diagram of a form of the inward-foldable screen that is fully folded. In this case, the inward-foldable screen is in a folded state. It can be learned that, when the electronic device is in the unfolded state and the folded state, for a motor located near a bottom corner of a display screen, a relative position of motor distribution changes due to a change of a physical structure, so that the electronic device brings different vibration feedback to a user by using a same motor.

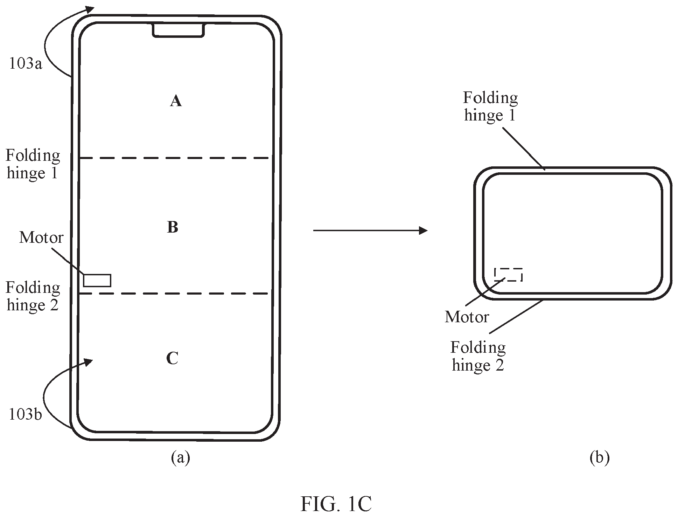

For still another example, FIG. 1C is a diagram of a product form of an electronic device with a tri-fold screen according to an embodiment of this application. (a) in FIG. 1C is a diagram of a form of the electronic device with the tri-fold screen that is fully unfolded. In this case, the electronic device with the tri-fold screen is in an unfolded state. The electronic device with the tri-fold screen is disposed with two folding hinges, and may be folded outward in a direction 103a shown in (a) in FIG. 1C and folded inward in a direction 103b shown in (a) in FIG. 1C along the folding hinges. (b) FIG. 1C is a diagram of a form of the electronic device with the tri-fold screen that is fully folded. In this case, the electronic device with the tri-fold screen is in a folded state. It can be learned that, when the electronic device is in the unfolded state and the folded state, for a motor located near a middle display area, a relative position of motor distribution changes due to a change of a physical structure, so that the electronic device brings different vibration feedback to a user by using a same motor.

In some embodiments, the electronic device is disposed with more motors, to resolve the foregoing problem of different vibration feedback caused by a change of a usage status of the electronic device. For example, in the electronic device with a bi-fold screen shown in (a) in FIG. 1A, the foldable screen includes a display area A and a display area B. After the foldable screen is folded, the display area A and the display area B may be separately displayed. In this case, a motor 1 may be disposed in the display area A, and a motor 2 may be disposed in the display area B. In this way, vibration waveforms of the two motors are separately adjusted based on the usage status of the electronic device, so that the electronic device can bring same vibration feedback to the user in both the unfolded state and the folded state. For example, when the electronic device is in the folded state, the motor 1 or the motor 2 is controlled to vibrate at an amplitude 1; or when the electronic device is in the unfolded state, the motor 1 and the motor 2 are controlled to vibrate at an amplitude 2. The amplitude 2 is less than the amplitude 1.

In the foregoing solution, a corresponding quantity of motors are disposed based on a quantity of folded display areas, so that a problem of different vibration feedback in different usage statuses is resolved, but more motors increase hardware costs of the electronic device. In addition, if the electronic device is disposed with only one motor, the foregoing solution still cannot resolve the problem of different vibration feedback in different usage statuses. In addition, vibration feedback of some types of motors is also different when battery levels of the electronic device are different. Impact of the battery level on the vibration feedback is not considered in the foregoing solution. For example, when the battery level is low, vibration feedback provided by the motor of the electronic device is weak; or when the battery level is high, vibration feedback provided by the motor of the electronic device is strong.

In some embodiments, the electronic device obtains a folding parameter of the foldable screen, and adjusts a vibration parameter of the motor based on the folding parameter. In this way, when folding parameters are different, vibration energy generated by the motor is not completely absorbed by the foldable screen. The folding parameter includes, for example, a quantity of folding times.

In the foregoing solution, the vibration parameter is adjusted, so that the electronic device can adaptively adjust the vibration feedback in different usage statuses, but a process of calculating the vibration parameter based on the folding times is complex. In addition, in this solution, impact of a battery level on the vibration feedback is not considered.

In view of this, embodiments of this application provide a vibration control method. A vibration waveform of a motor is adaptively adjusted based on a usage status and battery level information of an electronic device, so that same vibration feedback is provided for a user in different usage scenarios, to improve user experience.

Optionally, the vibration control method provided in embodiments of this application may be applied to an electronic device 100. Optionally, the electronic device 100 may be, for example, a terminal device like a mobile phone, a tablet computer, an ultra-mobile personal computer (ultra-mobile personal computer, UMPC), a netbook, a personal digital assistant (personal digital assistant, PDA), a wearable device, or an artificial intelligence (artificial intelligence, AI) device. An operating system installed in the electronic device 100 includes but is not limited to Linux^{®}, iOS^{®}, Android^{®}, Harmony^{®}, Windows^{®}, or another operating system. A specific type of the electronic device 100 and the operating system installed in the electronic device 100 are not limited in this application.

Optionally, the electronic device 100 is disposed with a foldable screen, and a usage status of the electronic device 100 includes a folded state and an unfolded state.

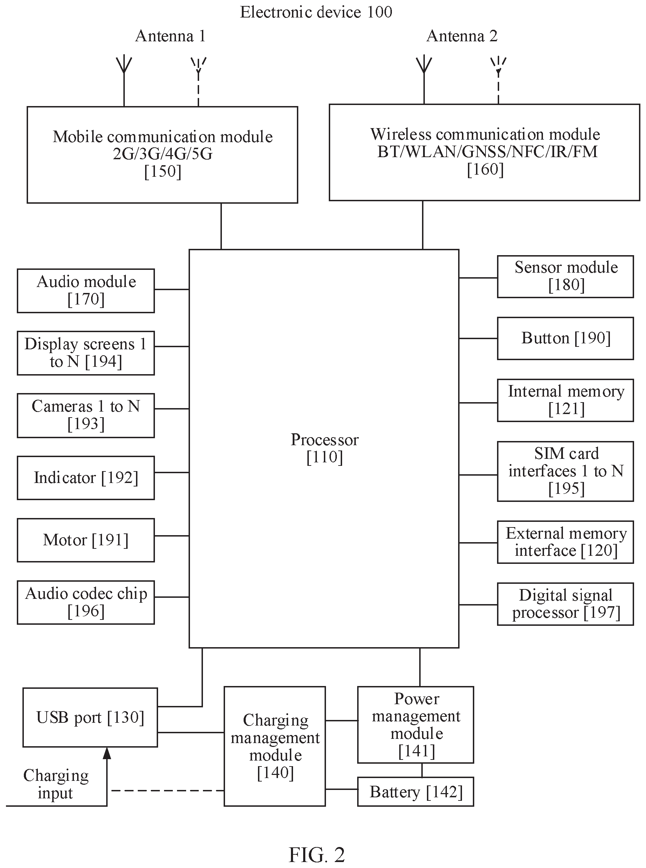

For example, FIG. 2 is a diagram of a structure of the electronic device 100.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identity module (subscriber identification module, SIM) card interface 195, an audio codec (codec) chip 196, a digital signal processor 197, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The charging management module 140 is configured to receive a charging input from a charger. The charger may be a wireless charger or a wired charger. In some embodiments of wired charging, the charging management module 140 may receive a charging input of the wired charger through the USB port 130. In some embodiments of wireless charging, the charging management module 140 may receive a wireless charging input through a wireless charging coil of the electronic device 100. The charging management module 140 supplies power to the electronic device via the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

In some embodiments, the electronic device 100 can obtain battery level information of the battery 142 via the power management module 141. For example, the electronic device 100 can obtain a voltage of the battery 142 via the power management module 141. When the voltage is greater than a voltage threshold, the battery 142 in the electronic device 100 has a sufficient battery level. When the voltage is less than a voltage threshold, the battery 142 in the electronic device 100 is in a low battery level state. For another example, the electronic device 100 directly obtains a battery level of the battery 142 via the power management module 141. When the battery level is greater than a battery level threshold, the battery 142 in the electronic device 100 has a sufficient battery level. When the battery level is less than a battery level threshold, the battery 142 in the electronic device 100 is in a low battery level state.

In some embodiments, the electronic device 100 adaptively adjusts a vibration parameter of a motor with reference to a battery level status of the battery 142.

The internal memory 121 may be configured to store computer-executable program code. The executable program code includes instructions. The internal memory 121 may include a program storage area and a data storage area. The program storage area may store an operating system, an application needed by at least one function (for example, a voice playing function or an image playing function), and the like. The data storage area may store data (such as audio data and an address book) created in a process of using the electronic device 100, and the like. In addition, the internal memory 121 may include a high-speed random access memory, or may include a non-volatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The electronic device 100 may perform music playing, recording, or the like through the audio module 170. The audio module 170 may include a speaker, a receiver, a microphone, a headset jack, an application processor, and the like, to implement an audio function.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

The magnetic sensor includes a Hall effect sensor. The electronic device 100 may detect the usage status of the electronic device 100 by using the Hall effect sensor. In some embodiments, the electronic device 100 obtains a Hall parameter reported by the Hall effect sensor, and can determine, based on the Hall parameter, that the electronic device 100 is currently in the unfolded state or the folded state. Optionally, the Hall parameter includes, for example, a Hall coefficient.

The motor 191 may generate a vibration prompt. The motor 191 may be configured to provide an incoming call vibration prompt and touch vibration feedback. For example, touch operations performed on different applications (for example, photographing and audio play) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. Touch vibration feedback effect may be further customized.

A software system of the electronic device 100 may use a layered architecture, an event-driven architecture, a microkernel architecture, a micro service architecture, or a cloud architecture. In this embodiment of this application, an Android system with a layered architecture is used as an example to describe a software structure of the electronic device 100.

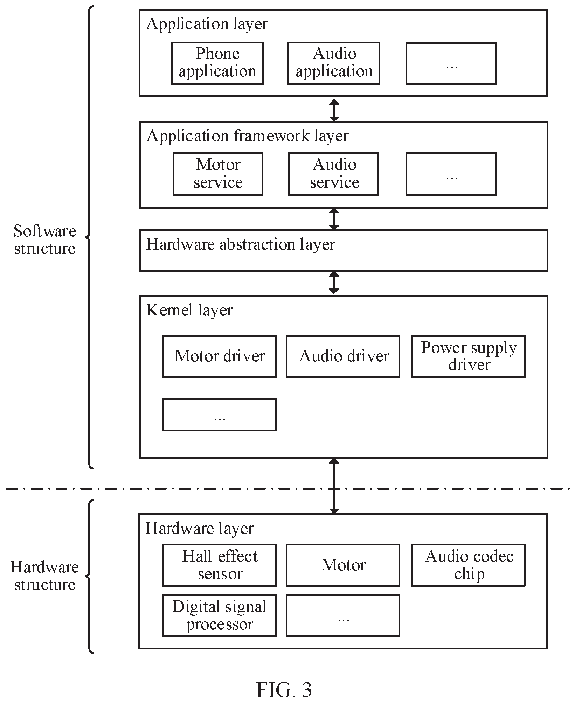

FIG. 3 is a block diagram of the software structure of the electronic device 100 according to this embodiment of this application.

In the layered architecture, software is divided into several layers, and each layer has a clear role and task. The layers communicate with each other through a software interface. In some embodiments, the Android system is divided into four layers: an application layer, an application framework layer, a hardware abstraction layer (hardware abstraction layer, HAL) layer, and a kernel layer from top to bottom.

The application layer may include a series of application packages.

As shown in FIG. 3, the application package may include a phone, audio, and other applications.

The application framework layer provides an application programming interface (application programming interface, API) and a programming framework for the application at the application layer. The application framework layer includes some predefined functions.

As shown in FIG. 3, the application framework layer may include a motor service, an audio service, and the like.

The motor service is used to determine a motor vibration waveform, and send the motor vibration waveform to a motor via a motor driver, to drive the motor to vibrate based on the motor vibration waveform.

The audio service is used to obtain, process, and perform transmission of audio data and refresh an underlying path of a corresponding scenario. Optionally, different underlying paths correspond to different volumes or motor vibration gains. In some examples, the audio service is further used to obtain messages such as a vibration event sent by the motor service, a Hall parameter reported by a Hall effect sensor, and battery level information reported by a power supply driver. The audio service may trigger underlying path refreshing based on the obtained message.

The HAL layer encapsulates a Linux kernel driver program, provides an interface for an upper layer, and shields an implementation detail of underlying hardware.

The kernel layer is a layer between hardware and software. The kernel layer includes, for example, a motor driver, an audio driver, and a power supply driver.

The following describes an example of a working procedure of software and hardware of the electronic device 100 with reference to an incoming call vibration scenario.

As shown in FIG. 3, when a phone application at the application layer receives an incoming call notification, it is determined that a notification manner includes vibration. The phone application sends a vibration indication to the motor service, to trigger a vibration procedure of the electronic device 100. In response to the indication, the motor service determines that the obtained Hall parameter needs to be forwarded to the audio service. The motor driver may obtain the Hall parameter uploaded by the Hall effect sensor. In this case, the motor service may indicate the motor driver to forward the obtained Hall parameter to the audio driver, so that the audio driver reports the Hall parameter to the audio service. Then, the audio service can obtain a current usage status of the electronic device based on the Hall parameter, for example, the electronic device is in an unfolded state or the electronic device is in a folded state. In addition, the power supply driver can obtain the battery level information of a battery of the electronic device, and report the battery level information to the audio service. Then, the audio service may obtain a needed gain with reference to the usage status and the battery level information of the electronic device. Then, the audio service delivers the gain to the audio codec chip via the audio driver. In addition, the motor service sends the vibration waveform to the digital signal processor via the motor driver in response to the indication sent by the phone application, and the digital signal processor forwards the vibration waveform to the audio codec chip. Then, the audio codec chip corrects the vibration waveform by using the gain, delivers a corrected vibration waveform to the motor, and drives the motor to vibrate based on the vibration waveform.

The electronic device adaptively corrects the vibration waveform with reference to the usage status and the battery level information. An amplitude of the corrected vibration waveform meets a requirement of a current usage scenario, so that the electronic device can bring same vibration feedback to a user in different usage scenarios.

The following describes in detail a specific implementation process of adaptively adjusting the vibration waveform.

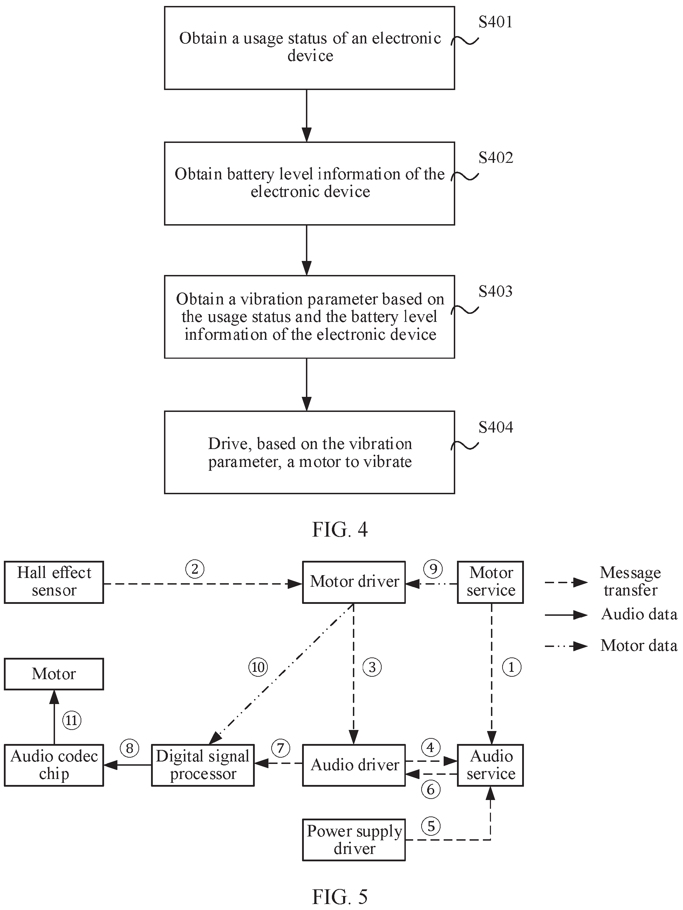

FIG. 4 is a schematic flowchart of a vibration control method according to an embodiment of this application. It should be noted that the method is not limited to the specific sequence described in FIG. 4 and the following. It should be understood that in other embodiments, sequences of some steps in the method are interchangeable based on an actual requirement, or some steps in the method may be omitted or deleted. The method includes the following steps.

S401: An electronic device obtains a usage status of the electronic device.

The usage status of the electronic device may include an unfolded state and a folded state.

Optionally, the usage status of the electronic device may further include an intermediate state. For example, the intermediate state may include a state in which the electronic device is not fully folded. For example, in the electronic device with the bi-fold screen shown in FIG. 1A, in response to a user operation, the electronic device folds inward. When a folding angle is 90 degrees, a user stops a folding operation, and the electronic device is currently in the intermediate state. For another example, the electronic device is the electronic device with the tri-fold screen shown in FIG. 1C. In response to a user operation, the electronic device folds a display area A outward in the direction 103a along a folding hinge 1, so that the display area A and a display area B are opposite, and a display area C is not folded. In this case, a current usage status of the electronic device is, for example, the intermediate state.

In some embodiments, the electronic device may obtain the usage status of the electronic device by using detection data of a sensor. For example, the electronic device may obtain the usage status of the electronic device by using a Hall parameter uploaded by a Hall effect sensor. Optionally, the electronic device may further obtain the usage status of the electronic device with reference to detection data of a plurality of sensors such as a distance sensor and a light sensor.

In some embodiments, the Hall effect sensor may report the Hall parameter through interrupt triggering. The interrupt triggering includes, for example, triggering, when the usage status of the electronic device changes, the Hall effect sensor to report the Hall parameter. For example, after the usage status of the electronic device changes from the unfolded state to the folded state, the Hall effect sensor reports the Hall parameter. Alternatively, the usage status of the electronic device changes from the folded state to the unfolded state, and then the Hall effect sensor reports the Hall parameter. Therefore, to avoid that the electronic device cannot obtain the current usage status of the electronic device because the Hall effect sensor does not report the Hall parameter because the usage status of the electronic device does not change, optionally, in a startup initialization process, the electronic device may obtain an initial Hall parameter of a current Hall effect sensor. For example, the electronic device obtains the initial Hall parameter in a manner of reading a device file, to determine a usage status of the electronic device during initialization. In this case, if the electronic device does not detect a latest reported Hall parameter when the usage status of the electronic device needs to be obtained subsequently, it may be determined that the current usage status of the electronic device is the usage status during startup initialization, and the usage status of the electronic device during the startup initialization is determined based on the initial Hall parameter.

In some embodiments, the electronic device is disposed with a vibration unit that is configured to trigger vibration of the electronic device. For example, the vibration unit is a motor. Optionally, the electronic device is disposed with at least one motor.

In some embodiments, a motor driving manner of the electronic device may include chip driving and audio data driving. Motor driving is that a motor service delivers vibration waveforms with different amplitudes to a motor chip via a motor driver, and the motor chip may indicate the motor to vibrate based on different vibration waveforms. The audio data driving is that the motor driver delivers a vibration waveform to an audio codec chip via a digital signal processor based on an underlying path selected by an audio service. Different underlying paths correspond to different gains. In this way, the audio codec chip delivers a vibration waveform corrected by the gain to the motor, to indicate the motor to vibrate based on the corrected waveform. A process of underlying path selection includes: The audio service sends path information to the audio codec chip via an audio driver, where the path information indicates the underlying path. The audio service sends interface information to the digital signal processor via the audio driver, where the interface information includes an identifier of an interface for transmission of audio data and an identifier of an interface for transmission of motor data. The identifier of the interface indicates an interface for subsequent transmission of the audio data or the motor data. Optionally, the interface information corresponds to the underlying path indicated by the path information. In this way, in a subsequent process of motor data transmission, after the motor driver sends the motor data to a corresponding interface of the digital signal processor, the digital signal processor may send the motor data to an underlying path corresponding to the audio codec chip.

In some embodiments, in different motor driving manners, modules for determining the usage status of the electronic device are different. For example, in a motor driving manner of audio data driving, the audio service may determine the usage status of the electronic device and perform multi-information fusion. For another example, in a motor driving manner of chip driving, the motor service may determine the usage status of the electronic device and perform multi-information fusion.

Optionally, the multi-information fusion indicates that a vibration parameter is obtained based on the usage status and battery level information of the electronic device. For a specific process of the multi-information fusion, refer to related content in the following step S403.

For example, in an audio data driving scenario shown in FIG. 5, an application detects a vibration event, and delivers the vibration event to the motor service. For example, in response to an incoming call notification, if a phone application determines, based on an incoming call event, that vibration needs to be triggered, it may be determined that the vibration event is detected. After obtaining the vibration event, the motor service indicates the motor driver to report the Hall parameter. In the audio data driving scenario, the audio service performs multi-information fusion to determine the gain. In this case, the motor service indicates the motor driver to forward the obtained Hall parameter to the audio service, and sends an indication message to the audio service, to indicate, to the audio service, that the vibration event is currently detected, and multi-information fusion needs to be performed (for example, step ①). Optionally, after obtaining the Hall parameter, the Hall effect sensor uploads the Hall parameter to the motor driver (for example, step ②). Then, the motor driver forwards the Hall parameter to the audio service via the audio driver (for example, step ③ and step ④).

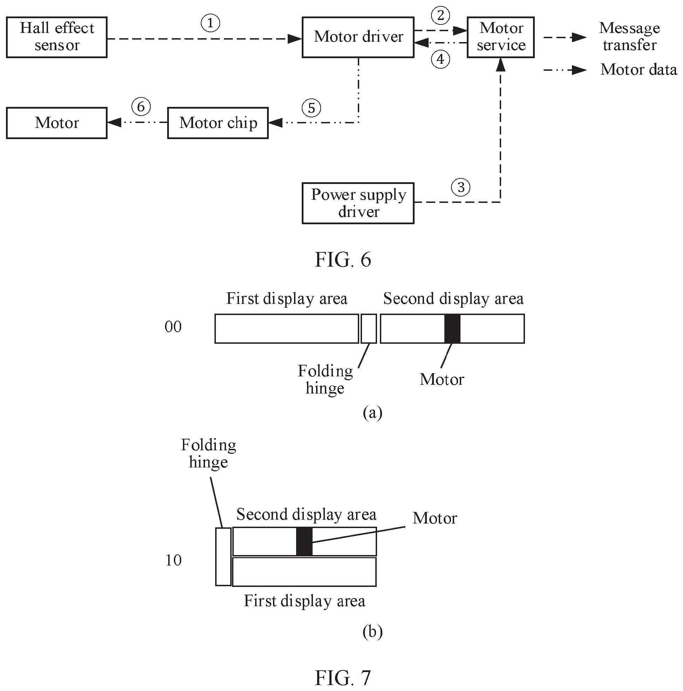

For another example, in a chip driving scenario shown in FIG. 6, the motor service performs multi-information fusion to obtain the vibration parameter. In this case, in response to the vibration event, the motor service indicates the motor driver to report the Hall parameter. Optionally, after obtaining the Hall parameter, the Hall effect sensor uploads the Hall parameter to the motor driver (for example, step ①). Then, the motor driver reports the Hall parameter to the motor service (for example, step ②).

Optionally, vibration events are different in different vibration scenarios. For example, in addition to the foregoing incoming call event, the vibration event may further include an alarm clock event, a message notification event, and the like. A specific vibration scenario is not limited in this embodiment of this application.

S402: The electronic device obtains the battery level information of the electronic device.

In some embodiments, when a battery level of the electronic device is sufficient, the electronic device can drive the motor to vibrate by using a vibration waveform with a large amplitude, to bring a strong vibration sense to the user. However, when the battery level of the electronic device is insufficient, the electronic device needs to reduce an amplitude of the vibration waveform to save electricity, and therefore the vibration sense felt by the user is also reduced. Therefore, the electronic device needs to obtain the battery level information of the electronic device, to subsequently obtain the vibration parameter based on the battery level information, so that same vibration feedback may be brought to the user in different battery levels.

For example, in the audio data driving scenario shown in FIG. 5, in response to the indication message that is sent by the motor service and that indicates the vibration event, the audio service may request a power supply driver to obtain the battery level information. Correspondingly, after obtaining the battery level information, the power supply driver reports the battery level information to the audio service (for example, step ⑤).

For another example, as shown in step ③ in FIG. 6, in response to the vibration event, the motor service obtains the battery level information reported by the power supply driver.

It should be understood that, in FIG. 5 or FIG. 6, a dashed line arrow indicates a direction in which underlying hardware transfers a message to an upper-layer service, and the transferred message is, for example, the Hall parameter and the battery level information.

In some embodiments, the battery level information includes at least one of a voltage, a battery level, and a current of a battery.

In some embodiments, an execution sequence of step S401 and step S402 is not limited in embodiments of this application. For example, the electronic device may first obtain the usage status of the electronic device, and then obtain the battery level information of the electronic device, that is, step S401 is first performed, and then step S402 is performed. Alternatively, the electronic device may first obtain the battery level information of the electronic device, and then obtain the usage status of the electronic device, that is, step S402 is first performed, and then step S401 is performed. Alternatively, the electronic device may obtain the usage status and the battery level information of the electronic device simultaneously, that is, step S401 and step S402 are performed simultaneously.

S403: The electronic device obtains the vibration parameter based on the usage status and the battery level information of the electronic device.

In some embodiments, the electronic device is preconfigured with vibration parameters corresponding to different usage statuses and battery level information. Therefore, after obtaining the usage status and the battery level information of the electronic device by using the foregoing step S401 and step S402, the electronic device may match the corresponding vibration parameter based on the usage status and the battery level information.

Optionally, an example in which the usage status includes the unfolded state and the folded state, and a battery level status of the electronic device includes a high battery level and a low battery level is used. The usage status and the battery level information of the electronic device are combined. In this case, a status of the electronic device may include a high battery level unfolded state, a low battery level unfolded state, a high battery level folded state, and a low battery level folded state.

Optionally, vibration feedback generated when the electronic device is in the high battery level unfolded state is used as a reference, and vibration feedback generated when the electronic device is in another status is adjusted, through vibration parameter adjustment, to be the same as or similar to the vibration feedback generated when the electronic device is in the high battery level unfolded state.

Optionally, the vibration feedback may be measured by using a vibration acceleration (unit: g). For example, a vibration acceleration of the vibration feedback generated through motor vibration when the electronic device is in the high battery level unfolded state may be obtained, and the vibration acceleration may be set as a target vibration acceleration. In this case, the electronic device may be preconfigured with vibration parameters corresponding to different statuses of the electronic device, so that when the electronic device is in different statuses, a vibration acceleration generated through motor vibration is the same as the target vibration acceleration. It should be noted that "same" does not mean absolute same. When the electronic device is in different statuses, there may be a deviation between vibration accelerations generated through motor vibration. For example, the deviation may be ±30%. For example, when the target vibration acceleration is 1 g, the vibration acceleration generated through motor vibration when the electronic device is in different statuses may be [0.7, 1.3] g.

It should be understood that, vibration feedback corresponding to the electronic device in another status may alternatively be used as a reference, to obtain vibration parameters corresponding to different usage statuses and battery level information of the electronic device. In addition, the foregoing target vibration acceleration and deviation are merely examples for description.

In this way, the electronic device is preconfigured with the vibration parameters corresponding to different usage statuses and battery level information, to improve efficiency of obtaining the vibration parameter.

In addition, because the motor is located on a mainboard of the electronic device, vibration feedback provided in the unfolded state is weak. In this case, the vibration feedback in the high battery level unfolded state is used as vibration feedback reference in different statuses, so that a problem of an abnormal device sound caused by large vibration can be resolved when it is ensured that the electronic device can provide same or similar vibration feedback for the user in different statuses.

In some embodiments, in the audio data driving scenario, the vibration parameter may include the vibration waveform and the gain. Optionally, the gain includes an analog gain and a digital gain. The analog gain may amplify an analog signal, and the digital gain may amplify a signal obtained through analog-to-digital conversion. Optionally, the gain is used to adjust a frequency and an amplitude of a data point in the vibration waveform. Optionally, the electronic device obtains the vibration waveform via the motor driver, and obtains the gain via the audio driver. Optionally, after obtaining the vibration parameter, the audio codec chip corrects the vibration waveform in the vibration parameter by using the gain in the vibration parameter, to adaptively adjust the vibration waveform based on the usage status and the battery level information, and implement adaptive adjustment of the vibration feedback.

In some examples, in the audio data driving scenario, the motor service determines a default vibration waveform.

In some examples, in the audio data driving scenario, the audio service may obtain a corresponding gain based on the usage status and/or the battery level information of the electronic device. For example, when the usage status is the folded state, a small amplitude is needed to bring large vibration feedback to the user. Therefore, when the electronic device is in the folded state, the audio service may match a small gain. For another example, when the usage status is the unfolded state, a large amplitude is needed to bring general vibration feedback to the user. Therefore, when the electronic device is in the unfolded state, the audio service may match a large gain. For another example, the battery level information may include the voltage, and when the battery level is low, the amplitude of the vibration waveform is small. Therefore, if a current voltage of the electronic device is less than or equal to a voltage threshold, it indicates that the electronic device is currently in a low battery level state, and the amplitude of the vibration waveform needs to be increased. Therefore, the audio service may match a large gain. For still another example, usually, when the battery level is high, the amplitude of the vibration waveform is large. Therefore, after the audio service obtains the voltage in the battery level information, if a current voltage of the electronic device is greater than a voltage threshold, it indicates that the electronic device is currently in a high battery level state, and the amplitude of the vibration waveform needs to be reduced. Therefore, the audio service may match a small gain. In this case, with reference to the four cases of the foregoing examples, the audio service may successfully match a proper gain. For another example, the battery level information may include the current, and when the battery level is low, the amplitude of the vibration waveform is small. Therefore, if a current current of the electronic device is less than or equal to a current threshold, it indicates that the electronic device is currently in a low battery level state, and the amplitude of the vibration waveform needs to be increased. Therefore, the audio service may match a large gain. For still another example, usually, when the battery level is high, the amplitude of the vibration waveform is large. Therefore, after the audio service obtains the current in the battery level information, if a current current of the electronic device is greater than a current threshold, it indicates that the electronic device is currently in a high battery level state, and the amplitude of the vibration waveform needs to be reduced. Therefore, the audio service may match a small gain. The electronic device may alternatively directly obtain the battery level of the battery. When the battery level is less than or equal to a battery level threshold, it indicates that the electronic device is currently in a low battery level state, and the amplitude of the vibration waveform needs to be increased. Therefore, the audio service may match a large gain. For still another example, usually, when the battery level is high, the amplitude of the vibration waveform is large. Therefore, when the battery level of the battery is greater than a battery level threshold, it indicates that the electronic device is currently in a high battery level state, and the amplitude of the vibration waveform needs to be reduced. Therefore, the audio service may match a small gain.

Optionally, the battery level threshold may be 10%, the voltage threshold is, for example, a voltage value corresponding to the battery level 10% of the battery, and the current threshold is, for example, a current value corresponding to the battery level 10% of the battery.

Optionally, the electronic device is preconfigured with gain flag bits corresponding to different cases, and the electronic device may automatically match a proper gain flag bit based on an actual situation. For example, in Case A, the high battery level unfolded state corresponds to a gain flag bit 1; in Case B, the low battery level unfolded state corresponds to a gain flag bit 2; in Case C, the high battery level folded state corresponds to a gain flag bit 3; and in Case D, the low battery level folded state corresponds to a gain flag bit 4.

Different cases correspond to different gain flag bits. In this way, when the electronic device is in different usage statuses and has different battery level information, different corresponding vibration parameters (for example, the gain flag bits) can be obtained. The vibration parameter is used to subsequently drive the motor to vibrate, to provide same or similar vibration feedback for the user.

For example, in the audio data driving scenario shown in FIG. 5, the audio service obtains, in step ④, the Hall parameter reported by the audio driver, and determines the usage status of the electronic device. In addition, the audio service obtains the battery level information reported by the power supply driver in step ⑤, and determines the battery level status of the electronic device. In this case, the audio service may match the corresponding gain flag bit with reference to the usage status and the battery level status of the electronic device.

It should be understood that the electronic device may alternatively be directly configured with gains corresponding to different cases. In this case, in a running process, the electronic device may directly successfully match a corresponding gain based on an actual situation. For example, in Case A, the high battery level unfolded state corresponds to a gain 1; in Case B, the low battery level unfolded state corresponds to a gain 2; in Case C, the high battery level folded state corresponds to a gain 3; and in Case D, the low battery level folded state corresponds to a gain 4. Therefore, in an example scenario, when the electronic device is in the high battery level unfolded state in Case A, the electronic device may directly successfully match the gain 1, and does not need to first successfully match a corresponding gain flag bit and then successfully match a corresponding gain, to improve gain obtaining efficiency.

In some embodiments, the vibration parameter may include the vibration waveform. The electronic device obtains the vibration waveform by using the motor service.

In some examples, the motor service may match the corresponding vibration waveform with reference to the usage status and the battery level information of the electronic device. For example, when the usage status is the folded state, a small amplitude is needed to bring large vibration feedback to the user. Therefore, the motor service may match a vibration waveform with a small amplitude based on the folded state of the electronic device. For another example, when the usage status is the unfolded state, a large amplitude is needed to bring general vibration feedback to the user. Therefore, the motor service may match a vibration waveform with a large amplitude based on the unfolded state of the electronic device. For another example, usually, when the battery level is low, an amplitude of the vibration waveform that is triggered by default is small. Therefore, after the motor service obtains the voltage in the battery level information, when the current voltage is less than or equal to the voltage threshold, the motor service may determine that the electronic device is currently in the low battery level state, and a vibration waveform with a large amplitude needs to be matched. For still another example, usually, when the battery level is high, an amplitude of the vibration waveform that is triggered by default is large. Therefore, after the motor service obtains the voltage in the battery level information, when the current voltage is greater than the voltage threshold, the motor service may determine that the electronic device is currently in the high battery level state, and a vibration waveform with a small amplitude needs to be matched. In this case, with reference to the four cases of the foregoing example, the motor service may successfully match a proper vibration waveform.

Optionally, the electronic device is preconfigured with vibration waveforms corresponding to different cases, and amplitudes of these vibration waveforms are different. The electronic device may automatically match a proper vibration waveform based on an actual situation. For example, in Case A, the high battery level unfolded state corresponds to a vibration waveform 1; in Case B, the low battery level unfolded state corresponds to a vibration waveform 2; in Case C, the high battery level folded state corresponds to a vibration waveform 3; and in Case D, the low battery level folded state corresponds to a vibration waveform 4.

Different cases correspond to different vibration waveforms. In this way, when the electronic device is in different usage statuses and has different battery level information, different corresponding vibration parameters (for example, the vibration waveforms) can be obtained. The vibration parameter is used to subsequently drive the motor to vibrate, to provide same or similar vibration feedback for the user.

It should be noted that the usage status of the electronic device may further include the intermediate state, and the usage status and the battery level information of the electronic device are combined. In this case, a status of the electronic device may further include a high battery level intermediate state, a low battery level intermediate state, and the like. In this case, for matching a corresponding vibration parameter or vibration waveform based on the status of the electronic device, refer to the descriptions about matching the corresponding vibration parameter or vibration waveform based on another status of the electronic device in this embodiment of this application. Details are not described herein again.

For example, in the chip driving scenario shown in FIG. 6, the motor service obtains, in step ②, the Hall parameter reported by the motor driver, and obtains the usage status of the electronic device. In addition, the motor service obtains the battery level information reported by the power supply driver in step ③, and determines the battery level status of the electronic device. In this case, the motor service may match the corresponding vibration waveform with reference to the usage status and the battery level status of the electronic device.

In some embodiments, the electronic device sets true values of different bits by using a bitwise operation, to indicate various cases in the foregoing examples. In this way, based on a bit value, the electronic device may map a final gain flag bit or a vibration waveform sequence number.

In some examples, the electronic device sets a true value of a 0^{th} bit by using the bitwise operation, to indicate the battery level status of the electronic device. For example, 0 indicates that the electronic device is in the high battery level state, and 1 indicates that the electronic device is in the low battery level state. It should be understood that, alternatively, 1 may indicate that the electronic device is in the high battery level state, and 0 may indicate that the electronic device is in the low battery level state.

In some examples, the electronic device sets a true value of a 1^{st} bit by using the bitwise operation, to indicate the usage status of the electronic device. For example, 0 indicates that the electronic device is in the unfolded state, and 1 indicates that the electronic device is in the folded state. It should be understood that, alternatively, 1 may indicate that the electronic device is in the unfolded state, and 0 may indicate that the electronic device is in the folded state.

An electronic device with a bi-fold screen shown in (a) in FIG. 7 is used as an example. The electronic device obtains the usage status and the battery level information of the electronic device by using the foregoing step S401 and step S402. Then, the electronic device determines, based on the usage status and the battery level information, that the electronic device is currently in the high battery level unfolded state in Case A, and may set a corresponding bit value to 00.

An electronic device with a bi-fold screen shown in (b) in FIG. 7 is used as another example. The electronic device obtains the usage status and the battery level information of the electronic device by using the foregoing step S401 and step S402. Then, the electronic device determines, based on the usage status and the battery level information, that the electronic device is currently in the high battery level folded state in Case C, and may set a corresponding bit value to 10.

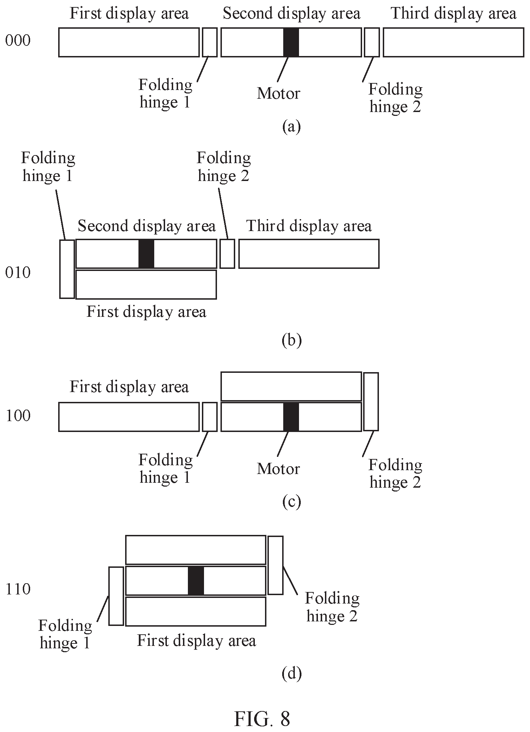

In some examples, the electronic device may be disposed with a display screen that can be folded more times. For example, the electronic device is an electronic device with a tri-fold screen. In this case, the electronic device may set true values of more bits by using the bitwise operation, to indicate a folded state of the electronic device. For example, as shown in FIG. 8, for the electronic device with the tri-fold screen, the display screen of the electronic device includes a first display area, a second display area, and a third display area. A folding hinge 1 exists between the first display area and the second display area, and a folding hinge 2 exists between the second display area and the third display area. The electronic device may set a true value of a 1^{st} bit by using the bitwise operation, to indicate a folded state of the first display area and the second display area of the electronic device (or described as a folded status of the folding hinge 1 of the electronic device), and set a true value of a 2^{nd} bit by using the bitwise operation, to indicate a folded state of the second display area and the third display area of the electronic device. For example, 0 indicates the unfolded state, and 1 indicates the folded state.

It should be understood that, alternatively, 1 may indicate the unfolded state, and 0 may indicate the folded state (or described as a folded state of the folding hinge 2 of the electronic device). In addition, in FIG. 8, an example in which the second display area is a middle display area between the folding hinge 1 and the folding hinge 2, and the first display area and the third display area are display areas on two sides of the second display area is used to describe a process in which the foldable state of the electronic device is indicated by using a bit truth value. It should be understood that a connection sequence of the three display areas is not limited in this embodiment of this application.

An electronic device with a tri-fold screen shown in (a) in FIG. 8 is used as an example. The electronic device obtains a usage status and battery level information of the electronic device by using the foregoing step S401 and step S402. Then, the electronic device determines, based on the usage status and the battery level information, that the electronic device is currently in a high battery level fully-unfolded state, and a corresponding bit value may be set to 000.

An electronic device with a tri-fold screen shown in (b) in FIG. 8 is used as another example. The electronic device obtains a usage status and battery level information of the electronic device by using the foregoing step S401 and step S402. Then, the electronic device determines, based on the usage status and the battery level information, that the electronic device is currently in the high battery level, that the first display area and the second display area are in the folded state, and that the second display area and the third display area are in the unfolded state, and a corresponding bit value may be set to 010.

An electronic device with a tri-fold screen shown in (c) in FIG. 8 is used as another example. The electronic device obtains a usage status and battery level information of the electronic device by using the foregoing step S401 and step S402. Then, the electronic device determines, based on the usage status and the battery level information, that the electronic device is currently in the high battery level, that the first display area and the second display area are in the unfolded state, and that the second display area and the third display area are in the folded state, and a corresponding bit value may be set to 100.

An electronic device with a tri-fold screen shown in (d) in FIG. 8 is used as still another example. The electronic device obtains a usage status and battery level information of the electronic device by using the foregoing step S401 and step S402. Then, the electronic device determines, based on the usage status and the battery level information, that the electronic device is currently in a high battery level fully-folded state, and a corresponding bit value may be set to 110.

In some examples, in the audio data driving scenario, the audio service determines a bit value based on the usage status and the battery level information of the electronic device. Then, the audio service may successfully match a corresponding gain flag bit based on the bit value.

In some other examples, in the chip driving scenario, the motor service determines the bit value based on the usage status and the battery level information of the electronic device. Then, the motor service may successfully match a corresponding vibration waveform based on the bit value.

In this way, by setting different bit values, the electronic device may adaptively successfully match a corresponding vibration parameter, to drive, by using a subsequent step, the motor to vibrate based on the successfully-matched vibration parameter.

It should be understood that the electronic device may set more bits, to match an electronic device with more folding hinges that may exist subsequently. Optionally, when the more bits are not used, the electronic device may set these bits to 0 (or 1).

S404: The electronic device drives, based on the vibration parameter, the motor to vibrate.

In some embodiments, after obtaining the vibration parameter, the electronic device may deliver the vibration parameter to the motor, to drive the motor to vibrate based on the corresponding vibration parameter.

For example, in the audio data driving scenario shown in FIG. 5, after obtaining the vibration parameter (for example, the gain flag bit), the audio service delivers the gain flag bit to the audio driver (for example, step ⑥), and then the audio driver forwards the gain flag bit to the audio codec chip, to trigger underlying path selection of the audio codec chip, where a selected underlying path corresponds to the gain flag bit. Optionally, the audio service sends the interface information to the digital signal processor via the audio driver. The interface information may include the identifier of the interface for transmission of the audio data and the identifier of the interface for transmission of the motor data (for example, step ⑥ and step ⑦). The identifier of the interface indicates an interface for subsequent transmission of the audio data or the motor data. In some examples, the motor service delivers the default vibration waveform to the digital signal processor via the motor driver (for example, step ⑨ and step ⑩). The digital signal processor forwards the obtained default vibration waveform to the audio codec chip based on the identifier of the interface for the motor data (for example, step ⑧). Optionally, the digital signal processor is, for example, high-fidelity (high-fidelity, HiFi). It should be understood that, in a usage scenario in which vibration is accompanied by audio playing, information delivered by the audio service further includes audio. The audio driver may send the audio to the digital signal processor, and the digital signal processor forwards the audio to an audio module (for example, a speaker) via the audio codec chip based on the identifier of the interface for the audio data, to trigger audio playing (for example, step ⑦ and step ⑧). Then, the audio codec chip may obtain a corresponding gain based on the gain flag bit, and correct the default vibration waveform by using the gain. For example, after the default waveform and the gain are input into the audio codec chip, the audio codec chip may output a corresponding corrected vibration waveform. Optionally, correction of the vibration waveform includes, for example, correction of parameters such as an amplitude and a frequency of the vibration waveform that affect the vibration sense. Then, the audio codec chip may deliver the corrected vibration waveform to the motor, to drive the motor to vibrate based on the corrected vibration waveform (for example, step ⑪).

It should be understood that, in FIG. 5, a direction in which the audio service transfers the audio data to lower-layer hardware is indicated by using a solid line arrow. The audio data is, for example, the gain flag bit and the corrected motor vibration waveform. A direction in which the motor service transfers the motor data to the lower-layer hardware is indicated by using a dot-dash line arrow. The motor data is, for example, the motor vibration waveform.

For another example, in the chip driving scenario shown in FIG. 6, the motor service may obtain the vibration parameter, for example, including a matched vibration waveform. Then, the motor service delivers the vibration waveform to the motor chip via the motor driver, and the motor chip drives the motor to vibrate based on the vibration waveform (for example, step ④, step ⑤, and step ⑥).

It should be understood that, in FIG. 6, a direction in which the motor service transfers the motor data to the lower-layer hardware is indicated by using a dot-dash line arrow. The motor data is, for example, the motor vibration waveform.

Optionally, the motor service may deliver the vibration waveform or a vibration waveform sequence number. When the motor service delivers the vibration waveform sequence number, the audio codec chip or the motor may match the corresponding vibration waveform based on the vibration waveform sequence number.

Because the motor drive vibrates by using a same vibration waveform when the electronic device is in different usage statuses, vibration feedback brought to the user is different. For example, after the electronic device with the foldable screen is folded, a relative position of the motor changes, and the vibration sense of the user also changes. For another example, the motor of the electronic device is usually installed at a position close to a center. Consequently, after the electronic device is in the folded state, the motor is wrapped in a multi-layer folded flexible display. When the electronic device vibrates, because of flexibility of the flexible display, vibration energy generated by the motor based on a specified vibration parameter is absorbed by the multi-layer folded flexible display. Consequently, vibration of the electronic device that is sensed from outside of the electronic device is weak, which is different from vibration feedback brought to the user when the electronic device is in the unfolded state. In this way, the electronic device may obtain, through comprehensive determining with reference to the usage status and the battery level information of the electronic device, a vibration parameter suitable for a current usage scenario, so that the electronic device can provide same or similar vibration feedback for the user in different usage scenarios, to improve user experience.

In some embodiments, after the electronic device obtains the vibration parameter in response to the vibration event, and drives, by using the vibration parameter, the motor to vibrate, the electronic device does not dynamically adjust the vibration waveform based on the usage status and the battery level information of the electronic device in a motor vibration process. In this way, this can prevent frequent changing of the motor vibration sense in a folding and unfolding process from affecting user experience.

In some embodiments, the electronic device may alternatively obtain the vibration parameter separately based on the usage status or the battery level information of the electronic device.

For example, in the audio data driving scenario, the audio service determines a current battery level status of the electronic device based on the battery level information reported by the power supply driver. Then, the audio service matches the corresponding gain flag bit based on the battery level status, and delivers the gain flag bit to the digital signal processor via the audio driver. In addition, the motor service delivers the default vibration waveform to the digital signal processor by using the motor service. Then, the digital signal processor delivers the obtained vibration parameter, for example, the default vibration waveform and the gain flag bit, to the audio codec chip. The audio codec chip may obtain a corresponding gain based on the gain flag bit, and correct the default vibration waveform by using the gain. For example, after the default waveform and the gain are input into the audio codec chip, the audio codec chip may output a corresponding corrected vibration waveform. Then, the audio codec chip may deliver the corrected vibration waveform to the motor, to drive the motor to vibrate based on the corrected vibration waveform.

For another example, in the chip driving scenario, the motor service obtains the battery level information reported by the power supply driver, and determines a current battery level status of the electronic device. In this case, the motor service may match the corresponding vibration waveform based on the battery level status of the electronic device. In this case, the vibration parameter determined by the motor service includes, for example, the matched vibration waveform. Then, the motor service delivers the vibration waveform to the motor via the motor driver, to drive the motor to vibrate based on the vibration waveform.

For another example, in the audio data driving scenario, the audio service determines a current usage status of the electronic device based on the Hall parameter forwarded by the audio driver. Then, the audio service matches the corresponding gain flag bit based on the usage status, and delivers the gain flag bit to the digital signal processor via the audio driver. In addition, the motor service delivers the default vibration waveform to the digital signal processor by using the motor service. Then, the digital signal processor delivers the obtained vibration parameter, for example, the default vibration waveform and the gain flag bit, to the audio codec chip. The audio codec chip may obtain a corresponding gain based on the gain flag bit, and correct the default vibration waveform by using the gain. For example, after the default waveform and the gain are input into the audio codec chip, the audio codec chip may output a corresponding corrected vibration waveform. Then, the audio codec chip may deliver the corrected vibration waveform to the motor, to drive the motor to vibrate based on the corrected vibration waveform.

For still another example, in the chip driving scenario, the motor service obtains the Hall parameter reported by the Hall effect sensor via the motor driver, and determines a current usage status of the electronic device. In this case, the motor service may match the corresponding vibration waveform based on the usage status of the electronic device. In this case, the vibration parameter determined by the motor service includes, for example, the matched vibration waveform. Then, the motor service delivers the vibration waveform to the motor via the motor driver, to drive the motor to vibrate based on the vibration waveform.

In this way, the electronic device may also obtain the vibration parameter by using the usage status or the battery level information of the electronic device, and drive the motor to vibrate based on the vibration parameter, to reduce calculation power consumption of the electronic device.

In some embodiments, the electronic device is disposed with at least one Hall effect sensor or another sensor configured to detect the usage status of the electronic device.

Optionally, when a display screen is folded or unfolded, the Hall effect sensor triggers reporting of the Hall parameter to an upper layer, and the electronic device may determine, based on the Hall parameter, that the usage status of the electronic device changes. Optionally, to improve accuracy of Hall parameter detection, the Hall effect sensor is installed at a position near the folding hinge.

For example, in a scenario of the electronic device with the bi-fold screen shown in FIG. 7, the electronic device includes a folding hinge, and the electronic device is disposed with a Hall effect sensor (not shown in FIG. 7) near the folding hinge. Optionally, when a relationship between the first display area and the second display area changes to be in close contact, the Hall effect sensor sends the Hall parameter to the upper layer through interrupt triggering, and the electronic device may determine, based on the Hall parameter, that the usage status of the electronic device is the folded state. Alternatively, when a relationship between the first display area and the second display area changes to be separated, the Hall effect sensor sends the Hall parameter to the upper layer through interrupt triggering, and the electronic device may determine, based on the Hall parameter, that the usage status of the electronic device is the unfolded state.

For another example, in a scenario of the electronic device with the tri-fold screen shown in FIG. 8, the electronic device includes two folding hinges, and the electronic device is disposed with Hall effect sensors (not shown in FIG. 8) respectively near the two folding hinges. In this case, when a relationship between the first display area and the second display area changes from being in close contact to being separated, or from being separated to being in close contact, a Hall effect sensor 1 located near the folding hinge 1 sends a Hall parameter 1 to the upper layer through interrupt triggering. When a relationship between the second display area and the third display area changes from being in close contact to being separated, or from being separated to being in close contact, a Hall effect sensor 2 located near the folding hinge 2 sends a Hall parameter 2 to the upper layer through interrupt triggering. In this case, the electronic device needs to determine the usage status of the electronic device with reference to the Hall parameter 1 and the Hall parameter 2.

In other words, when the electronic device is disposed with one Hall effect sensor, the audio service or the motor service obtains a group of Hall parameters, and when the electronic device is disposed with a plurality of Hall effect sensors, the audio service or the motor service obtains a plurality of groups of Hall parameters. Then, the audio service or the motor service determines the usage status of the electronic device based on all the obtained Hall parameters.

In this way, the electronic device adaptively determines, based on an actual disposition status of the Hall effect sensor, a quantity of parameters that need to be referenced for determining the usage status of the electronic device.

In some embodiments, the electronic device is disposed with at least one motor. For example, in the scenario shown in FIG. 7 or FIG. 8, the electronic device is disposed with at least one motor.

In this way, even if the electronic device is disposed with only one motor, the electronic device may adaptively adjust vibration feedback through multi-information fusion with reference to the usage status and the battery level information of the electronic device. Compared with a solution in which a quantity of motors needs to be consistent with a quantity of display areas in a conventional technology, the vibration control method provided in this embodiment of this application effectively reduces hardware costs.

In some embodiments, the electronic device may choose to disable a dynamic vibration sense adjustment function based on the user operation. Optionally, the dynamic vibration sense adjustment function may uniformly disable or enable capabilities of dynamically adjusting the vibration sense of the electronic device based on the usage status and the battery level information. Alternatively, the dynamic vibration sense adjustment function may separately disable or enable a capability of dynamically adjusting the vibration sense of the electronic device based on the usage status or the battery level information.

For example, the user considers that when the battery level of the electronic device is low, vibration sense experience may be sacrificed, to prolong use time of the electronic device. In this case, the user may choose to separately disable the capability of dynamically adjusting the vibration sense based on the battery level information of the electronic device. Alternatively, the user may directly disable the capabilities of dynamically adjusting the vibration sense based on the usage status and the battery level information of the electronic device.

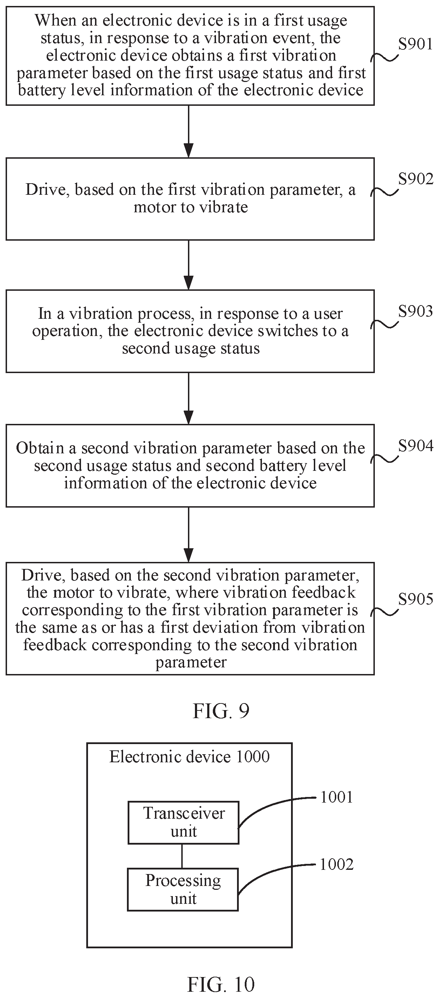

FIG. 9 is a schematic flowchart of another vibration control method according to an embodiment of this application. It should be noted that the method is not limited to the specific sequence described in FIG. 9 and the following. It should be understood that in other embodiments, sequences of some steps in the method are interchangeable based on an actual requirement, or some steps in the method may be omitted or deleted. The method includes the following steps.

S901: When an electronic device is in a first usage status, in response to a vibration event, the electronic device obtains a first vibration parameter based on the first usage status and first battery level information of the electronic device.

In some embodiments, the motor vibration event may be, for example, an incoming call event. When the electronic device detects an incoming call prompt, a motor needs to be triggered to vibrate. The electronic device may obtain the current first usage status and first battery level information of the electronic device, and then may obtain the first vibration parameter based on the first usage status and the first battery level information.

For example, based on the audio data driving scenario shown in FIG. 5, the electronic device may match the first gain flag bit corresponding to the first usage status and the first battery level information, and correct the default vibration waveform by using a gain indicated by the first gain flag bit, to obtain the vibration waveform 1.

For another example, based on the chip driving scenario shown in FIG. 6, the electronic device may match the vibration waveform A corresponding to the first usage status and the first battery level information.

S902: The electronic device drives, based on the first vibration parameter, the motor to vibrate.

For example, based on the audio data driving scenario shown in FIG. 5, the electronic device may drive, based on the first vibration parameter, the motor to vibrate, for example, drive the motor to vibrate based on the vibration waveform 1 obtained through gain correction.

For another example, based on the chip driving scenario shown in FIG. 6, the electronic device may drive, based on the first vibration parameter, the motor to vibrate, for example, drive the motor to vibrate based on the vibration waveform A.

S903: In a vibration process of the electronic device, in response to a user operation, the electronic device switches to a second usage status.

The second usage status is different from the first usage status.

In some embodiments, the user operation is, for example, an operation of changing the usage status of the electronic device. For example, the user operation is an operation in which the electronic device folds or unfolds the foldable screen of the electronic device.

S904: The electronic device obtains a second vibration parameter based on the second usage status and second battery level information of the electronic device.

In some embodiments, in the vibration process, when the electronic device detects an operation of changing the usage status of the electronic device by a user, in response to the operation, the electronic device may obtain the second usage status and the second battery level information of the electronic device. Then, the second vibration parameter may be obtained based on the second usage status and the second battery level information.

For example, based on the audio data driving scenario shown in FIG. 5, the electronic device matches the second gain flag bit corresponding to the second usage status and the second battery level information, and corrects the default vibration waveform by using a gain indicated by the second gain flag bit, to obtain the vibration waveform 2.

For another example, based on the chip driving scenario shown in FIG. 6, the electronic device matches the vibration waveform B corresponding to the second usage status and the second battery level information.

S905: The electronic device drives, based on the second vibration parameter, the motor to vibrate, where vibration feedback corresponding to the first vibration parameter is the same as or has a first deviation from vibration feedback corresponding to the second vibration parameter.

In some embodiments, the vibration feedback includes a vibration acceleration. For example, the motor is driven, based on the first vibration parameter, to vibrate to generate a first vibration acceleration, and the motor is driven, based on the second vibration parameter, to vibrate to generate a second vibration acceleration. The first vibration acceleration is the same as or has the first deviation from the second vibration acceleration.

For example, based on the audio data driving scenario shown in FIG. 5, the electronic device may drive, based on the second vibration parameter, the motor to vibrate, for example, drive the motor to vibrate based on the vibration waveform 2. The first vibration parameter is different from the second vibration parameter (for example, the first gain flag bit is different from the second gain flag bit), but vibration feedback brought, by driving the motor to vibrate, to the user is the same or similar. It should be noted that "same" does not mean absolute same. When the electronic device is in different statuses, there may be a deviation between vibration accelerations generated through motor vibration. For example, there may be a deviation between the first vibration acceleration generated when the motor vibrates based on the first vibration parameter and the second vibration acceleration generated when the motor vibrates based on the second vibration parameter. For example, the first deviation may be ±30%. In this way, in the audio data driving scenario, the electronic device can adaptively adjust a gain of the default vibration waveform based on the usage status and the battery level information, to bring same or similar vibration feedback to the user.

For another example, based on the chip driving scenario shown in FIG. 6, the electronic device may drive, based on the second vibration parameter, the motor to vibrate, for example, drive the motor to vibrate based on the vibration waveform B. The first vibration parameter is different from the second vibration parameter (for example, the vibration waveform A is different from the vibration waveform B), but vibration feedback brought, by driving the motor to vibrate, to the user is the same or similar. In this way, in the chip driving scenario, the electronic device can adaptively match a corresponding vibration waveform based on the usage status and the battery level information, to bring same or similar vibration feedback to the user.

In the foregoing example scenario, for a process in which the electronic device obtains the usage status (for example, the first usage status or the second usage status), a process in which the electronic device obtains the battery level information (for example, the first battery level information or the second battery level information), a process in which the electronic device obtains the vibration parameter (for example, the first vibration parameter or the second vibration parameter) based on the usage status and the battery level information, and a process in which the motor is driven, based on the vibration parameter, to vibrate, refer to related content in step S401 to step S404. Details are not described herein again.

In some embodiments, after the electronic device obtains, in response to the vibration event, the first vibration parameter based on the first usage status and the first battery level information, and drives, based on the first vibration parameter, the motor to vibrate, in the motor vibration process, if the electronic device switches from the first usage status to the second usage status, the electronic device no longer dynamically adjusts the vibration waveform based on the usage status and the battery level information of the electronic device in a process of changing from the first usage status to the second usage status. When the electronic device switches to the second usage status, the electronic device obtains, based on the second usage status and the second battery level information, the second vibration parameter, and drives, based on the second vibration parameter, the motor to vibrate. In this way, this can prevent frequent changing of the motor vibration sense in a folding and unfolding process from affecting user experience.

It should be understood that the foregoing describes an adaptive adjustment process of vibration feedback by using multi-information fusion analysis based on the usage status and the battery level information of the electronic device as an example. In addition, the electronic device may also perform multi-information fusion analysis with reference to more parameters that affect the vibration feedback of the electronic device, to provide more accurate vibration sense consistency experience for the user.

In some solutions, a plurality of embodiments of this application may be combined, and a combined solution is implemented. Optionally, some operations in procedures of the foregoing method embodiments are randomly combined, and/or a sequence of some operations is randomly changed. In addition, an execution sequence between steps of each procedure is merely an example, and does not constitute a limitation on an execution sequence between the steps. The steps may alternatively be performed in another execution sequence. It is not intended to indicate that the execution order is the only order in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some usage scenarios. Alternatively, another possible step may be added to the method embodiments.

In addition, the method embodiments may be implemented separately or in combination.

The foregoing describes in detail the vibration control methods provided in embodiments of this application with reference to FIG. 4 to FIG. 9. The following describes in detail an electronic device provided in embodiments of this application with reference to FIG. 10.

In a possible design, FIG. 10 is a diagram of a structure of an electronic device according to an embodiment of this application. As shown in FIG. 10, the electronic device 1000 includes a transceiver unit 1001 and a processing unit 1002. The electronic device 1000 may be configured to implement functions of the electronic device in the foregoing method embodiments.

Optionally, the transceiver unit 1001 is configured to support the electronic device 1000 in performing S401 and S402 in FIG. 4, and/or is configured to support the electronic device 1000 in performing S901 and S904 in FIG. 9.

Optionally, the processing unit 1002 is configured to support the electronic device 1000 in performing S403 and S404 in FIG. 4, and/or is configured to support the electronic device 1000 in performing S902, S903, and S905 in FIG. 9.

The transceiver unit may include a receiving unit and a sending unit, may be implemented by a transceiver or a transceiver-related circuit component, and may be a transceiver or a transceiver module. Operations and/or functions of units in the electronic device 1000 are respectively intended to implement corresponding procedures of the vibration control method in the foregoing method embodiments. All related content of steps in the foregoing method embodiments may be cited in function descriptions of corresponding functional units. For brevity, details are not described herein again.

Optionally, the electronic device 1000 shown in FIG. 10 may further include a storage unit (not shown in FIG. 10), and the storage unit stores a program or instructions. When the transceiver unit 1001 and the processing unit 1002 execute the program or the instructions, the electronic device 1000 shown in FIG. 10 may perform the vibration control method in the foregoing method embodiments.

For technical effects of the electronic device 1000 shown in FIG. 10, refer to technical effects of the vibration control method in the foregoing method embodiments. Details are not described herein again.

In addition to a form of the electronic device 1000, the technical solutions provided in this application may alternatively be a functional unit or a chip in the electronic device, or an apparatus that matches the electronic device for use.

An embodiment of this application further provides a chip system, including a processor, the processor is coupled to a memory, and the memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer-readable storage medium stores a computer program. When the computer program runs on a computer, the computer is caused to perform the foregoing related steps, to implement the vibration control method in the foregoing embodiments.

An embodiment of this application further provides a computer program product. When the computer program product runs on a computer, the computer is caused to perform the foregoing related steps, to implement the vibration control method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is caused to perform the vibration control method in the foregoing method embodiments.

The apparatus, the computer-readable storage medium, the computer program product, or the chip provided in embodiments of this application is configured to perform the corresponding method provided above. Therefore, for beneficial effect that can be achieved, refer to beneficial effect in the corresponding method provided above, and details are not described herein again.

Methods or algorithm steps described in combination with the content disclosed in this embodiment of this application may be implemented by hardware, or may be implemented by a processor by executing a software instruction. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

The description of the foregoing implementations allows a person skilled in the art to clearly understand that, for the purpose of convenient and brief description, division of the foregoing functional modules is used as merely an example for description. During actual application, the foregoing functions can be allocated to different functional modules for implementation based on a requirement. That is, an internal structure of the apparatus is divided into different functional modules to implement all or some of the functions described above. For a detailed working procedure of the foregoing system, apparatus, and unit, refer to a corresponding process in the foregoing method embodiments, and details are not described herein again.

In the several embodiments provided in this application, it should be understood that the disclosed method may be implemented in other manners. The apparatus embodiments described above are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, all functional units in embodiments of this application may be integrated into one processing unit, or each of the units may exist alone physically, or two or more units are integrated into one unit. The integrated unit may be implemented in a form of hardware, or may be implemented in a form of a software functional unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A vibration control method, applied to an electronic device, wherein the electronic device is an electronic device with a foldable screen, and the method comprises:
obtaining a usage status of the electronic device;
obtaining battery level information of the electronic device;
obtaining a vibration parameter based on the usage status and the battery level information; and
driving, based on the vibration parameter, a motor to vibrate.

2. The method according to claim 1, wherein the vibration parameter comprises a gain flag bit, and the driving, based on the vibration parameter, the motor to vibrate comprises:
obtaining a gain corresponding to the gain flag bit;
obtaining a first vibration waveform;
correcting, by using an audio codec chip, the first vibration waveform based on the gain, to obtain a second vibration waveform; and
driving, based on the second vibration waveform, the motor to vibrate.

3. The method according to claim 2, wherein the obtaining the first vibration waveform comprises:
obtaining, by using a first path of the audio codec chip, the first vibration waveform output by a motor service, wherein the first path corresponds to the gain, and the first vibration waveform is a default vibration waveform.

4. The method according to claim 2 or 3, wherein the obtaining the vibration parameter based on the usage status and the battery level information comprises:
matching the corresponding gain flag bit based on the usage status and the battery level information.

5. The method according to claim 1, wherein the vibration parameter comprises a third vibration waveform, and the driving, based on the vibration parameter, the motor to vibrate comprises:
obtaining, by using a motor chip, the third vibration waveform output by a motor service; and
driving, based on the third vibration waveform by using the motor chip, the motor to vibrate.

6. The method according to claim 5, wherein the obtaining the vibration parameter based on the usage status and the battery level information comprises:
matching the corresponding third vibration waveform based on the usage status and the battery level information.

7. The method according to any one of claims 1 to 6, wherein the electronic device is disposed with a Hall effect sensor, and the obtaining the usage status of the electronic device comprises:
obtaining a Hall parameter detected by the Hall effect sensor; and
obtaining the usage status based on the Hall parameter.

8. A vibration control method, applied to an electronic device, wherein the electronic device is an electronic device with a foldable screen, and the method comprises:
when the electronic device is in a first usage status, in response to a vibration event, obtaining a first vibration parameter based on the first usage status and first battery level information of the electronic device;
driving, based on the first vibration parameter, a motor to vibrate;
in a vibration process, in response to a user operation, switching, by the electronic device, to a second usage status, wherein the second usage status is different from the first usage status;
obtaining a second vibration parameter based on the second usage status and second battery level information of the electronic device; and
driving, based on the second vibration parameter, the motor to vibrate, wherein vibration feedback corresponding to the first vibration parameter is the same as or has a first deviation from vibration feedback corresponding to the second vibration parameter.

9. The method according to claim 8, wherein the vibration feedback comprises a vibration acceleration, and that the vibration feedback corresponding to the first vibration parameter is the same as or has the first deviation from the vibration feedback corresponding to the second vibration parameter comprises: driving, based on the first vibration parameter, the motor to vibrate to generate a first vibration acceleration, and driving, based on the second vibration parameter, the motor to vibrate to generate a second vibration acceleration, wherein the first vibration acceleration is the same as or has the first deviation from the second vibration acceleration.

10. The method according to claim 8 or 9, wherein the first vibration parameter comprises a gain flag bit, and the driving, based on the first vibration parameter, the motor to vibrate comprises:
obtaining a gain corresponding to the gain flag bit;
obtaining a first vibration waveform;
correcting, by using an audio codec chip, the first vibration waveform based on the gain, to obtain a second vibration waveform; and
driving, based on the second vibration waveform, the motor to vibrate.

11. The method according to claim 10, wherein the obtaining the first vibration waveform comprises:
obtaining, by using a first path of the audio codec chip, the first vibration waveform output by a motor service, wherein the first path corresponds to the gain, and the first vibration waveform is a default vibration waveform.

12. The method according to claim 10 or 11, wherein the obtaining the first vibration parameter based on the first usage status and the first battery level information comprises:
matching the corresponding gain flag bit based on the first usage status and the first battery level information.

13. The method according to claim 8 or 9, wherein the first vibration parameter comprises a third vibration waveform, and the driving, based on the first vibration parameter, the motor to vibrate comprises:
obtaining, by using a motor chip, the third vibration waveform output by a motor service; and
driving, based on the third vibration waveform by using the motor chip, the motor to vibrate.

14. The method according to claim 13, wherein the obtaining the first vibration parameter based on the first usage status and the first battery level information comprises:
matching the corresponding third vibration waveform based on the first usage status and the first battery level information.

15. The method according to any one of claims 8 to 14, wherein the electronic device is disposed with a Hall effect sensor, and the obtaining the first usage status of the electronic device comprises:
obtaining a Hall parameter detected by the Hall effect sensor; and
obtaining the first usage status based on the Hall parameter.

16. An electronic device, comprising a processor and a memory, wherein the memory is coupled to the processor, the memory is configured to store computer program code, the computer program code comprises computer instructions, and when the processor reads the computer instructions from the memory, the electronic device is caused to perform the method according to any one of claims 1 to 7, or the electronic device is caused to perform the method according to any one of claims 8 to 15.

17. A computer-readable storage medium, wherein the computer-readable storage medium comprises a computer program, and when the computer program runs on an electronic device, the electronic device is caused to perform the method according to any one of claims 1 to 7, or the electronic device is caused to perform the method according to any one of claims 8 to 15.

18. A computer program product, wherein when the computer program product is run on a computer, the computer is caused to perform the method according to any one of claims 1 to 7, or the computer is caused to perform the method according to any one of claims 8 to 15.
